# EUROPEAN PATENT SPECIFICATION

(11) **EP 0 849 284 B1**
(45) Date of publication and mention of the grant of the patent: **04.02.2004**
(21) Application number: 98104578.4
(22) Date of filing: 15.02.1991
(51) Int. Cl.: C08F 2/08, C08F 265/06, C08F 290/04

(54) **Stabilized polymer dispersion**
Stabilisierte Polymerdispersion
Dispersion de polymère stabilisée

(43) Date of publication of application: 24.06.1998
(62) Divisional of application: 91102149.1
(73) Proprietor: E.I. DU PONT DE NEMOURS AND COMPANY, Wilmington Delaware 19898 (US)
(72) Inventor: Antonelli, Joseph Albert, Riverton, New Jersey 08077 (US); Scopazzi, Christopher, Wilmington, Delaware 19810 (US); Doherty, Mark Matthew, Wilmington, Delaware 19808 (US)
(74) Representative: Abitz, Walter, Dr.-Ing.

(56) References cited:
- EP-A- 0 196 783
- US-A- 4 722 984
- US-A- 4 746 714

## Description

### Technical Field

This invention relates to a stabilized polymer dispersion. A process is described for preparing a dispersion of a polymer having an acrylic polymer core component and a polymeric stabilizer component, in which the stabilizer component is prepared using a cobalt catalytic chain transfer agent.

### Background and Summary of the Invention

The stabilized polymeric dispersions prepared according to this invention are described in a general way in U.S. Patent 4,746,714 to Spinelli, Scopazzi and Antonelli.

While those dispersions function very well for their intended purpose, the method described for their preparation provides no convenient way for incorporating living functional groups, especially hydroxyl groups, on the chains of the stabilizer polymer molecules. These functional groups confer certain advantages when the polymer system is to be cross-linked with melamines or isocyanates.

It has now been found that such groups can be easily incorporated on the stabilizer polymer molecules, in any number, if one uses a cobalt catalytic chain transfer agent in the polymer's preparation.

### Detailed Description

The principal polymers of the dispersions prepared according to the invention are described in U.S. Patent 4,746,714, previously mentioned.

The polymers described there have core components of acrylic polymers and substantially linear acrylic polymeric stabilizer components, each having a terminal polymerizable functional group, which are grafted to the core component at one end of the chain.

Illustrative of monomers which can be used to prepare the core components are those shown in the '714 patent, column 3, line 55, to column 4, line 25. Isocyanate, silane and amine functional monomers can also be used. Preferred for use in the process of the invention are methyl methacrylate, hydroxyethyl methacrylate, methacrylic acid, methyl acrylate, styrene and glycidyl methacrylate.

The monomers used to prepare the stabilizer component according to the invention can be any of the conventional polymerizable ethylenically unsaturated monomers. Preferred for use are butyl methacrylate, isobutyl methacrylate, 2-ethylhexyl methacrylate, hydroxyethyl methacrylate, methyl methacrylate, glycidyl methacrylate, itaconic acid or anhydride, maleic acid or anhydride, styrene, isocyanatoethyl methacrylate, benzene 1-(1-isocyanato-1-methyl ethyl)-3,4(1-methyl ethenyl), methacrylic acid, acrylic acid, silanes and amines.

The ratio of monomer units in the final polymer is a matter of choice, as will be understood by those skilled in this art.

The catalytic chain transfer agent used in the process of the invention are diaquabis(borondifluorodimethylglyoximato)cobaltate (II) and diaquabis(borondifluorodiphenylglyoximato)cobaltate (II).

The chain transfer agents are ordinarily used at concentrations of 5-150 ppm based on monomers.

The process is run in two steps, the second of which can be run immediately after the first but which is ordinarily run after a pause for analysis and to permit more efficient use of the reactor.

In step one, a mixture of stabilizer monomers and organic liquid is heated, preferably to reflux temperature for ease of control, and to it is added the catalytic chain transfer agent of choice, additional monomer(s) and solvent, and the usual amount of a conventional polymerization initiator such as azo- or peroxide initiators. The reaction is run, with additions of monomers and initiator as needed, until the desired stabilizer component is obtained (ordinarily having a M_{w} of 5000-12000).

In step two, an organic liquid which is a solvent for the stabilizer component but a non-solvent for the core component is added to the product of step one. "Solvent" and "non-solvent" are being used in the conventional sense, as will be understood by those skilled in the polymer art. Illustrative of organic liquids which can be used are aromatic- and aliphatic hydrocarbons such as heptane and VM&P naphtha. Mixtures of liquids can also be used. The stabilizer/liquid ratio is of secondary importance, but is usually in the range 1/2 to 1/4 (weight).

The resulting mixture is again heated, preferably to reflux temperature for better control and to it are added the core monomers and a conventional initiator such as one of those previously mentioned, in the usual amount. Polymerization is continued, with additions of liquid and initiator as needed, until it is complete, as determined by periodic sampling and analysis.

The dispersions prepared according to the process of the invention can be used to modify the rheology and/or the physical properties of conventional coating compositions at concentrations of 1-80%, preferably 10-40%, by weight of the total composition.

### Examples

Those skilled in the art will be able to practice this invention more easily after referring to the following illustrative examples.

In the examples, all parts are by weight unless indicated otherwise.

### Example 1

### Part A

To a reaction vessel were charged

| | |
|---|---|
| Toluene | 827.2 parts |
| n-butyl methacrylate | 447.9 |
| 2-Ethylhexyl methacrylate | 588.9 |
| 3-methacryloxypropyltrimethoxysilane (A-174) | 108.1 |

This mixture was brought to reflux temperature, held there under nitrogen with stirring, and to it was then added, over a ten-minute period, a solution of

| | |
|---|---|
| 1,1'-azobis(cyclohexanecarbonitrile) (initiator) | 1.14 parts |
| Diaquabis(borondifluorodimethylglyoximato)cobaltate(II) | 0.023 |
| n-butyl methacrylate | 80.7 |
| Toluene | 42.1 |

The reaction mixture was then held at reflux temperature, with stirring, and to it was added, over a 60-minute period, a mixture of

| | |
|---|---|
| n-butyl methacrylate | 209.0 |
| 2-ethylhexyl methacrylate | 271.6 |
| A-174 (described above) | 63.6 |
| Initiator | 1.95 |

This was followed immediately by the addition of a solution of

| | |
|---|---|
| n-butyl methacrylate | 209.0 parts |
| 2-ethylhexyl methacrylate | 304.9 |
| A-174 (described above) | 63.0 |
| Initiator | 2.12 |
| Toluene | 84.4 |

over a 180-minute period while maintaining reflux temperature. The reaction mixture was then held at reflux temperature, with stirring, for 30 minutes after which time was added, over a 60-minute period, a mixture of

| | |
|---|---|
| Toluene | 105.9 parts |
| Initiator | 0.5 |

This reaction mixture was held at reflux temperature for 60 minutes, and toluene (246.3 parts) was then added to it and the mixture cooled. The resulting solution, 64.2% solids, contained the stabilizer component 2-EHMA/IBMA/A-174 50/40/10.

### Part B

To a reaction vessel were charged

| | |
|---|---|
| Product of (A) | 265.0 parts |
| Heptane | 396.0 |

This mixture was brought to reflux temperature and to it were then added 0.6 parts of t-butyl peroctoate. The mixture was then held at reflux temperature and to it were immediately and simultaneously added, over a 210-minute period,
(1) A solution of

| | |
|---|---|
| Methyl methacrylate | 207.9 parts |
| Methyl acrylate | 103.9 |
| Styrene | 62.4 |
| A-174 | 41.6 |
| Heptane | 19.3 |
| Product of A | 128.8 |

and
(2) A solution of

| | |
|---|---|
| Heptane | 67.7 |
| t-butyl peroctoate | 6.2 |

The resulting mixture was held at reflux temperature for 45 minutes, and to it was then added, over a 30-minute period, at reflux, a solution of

| | |
|---|---|
| Heptane | 24.7 parts |
| t-butyl peroctoate | 4.1 |

This was again held at reflux temperature for 60 minutes, and 119.7 parts of solvent were boiled off to give a dispersion containing 55% solids.

The composition of the principal polymer in the resulting product was
BMA/2-EHMA/A-174/MMA/MA/STY
14.4/18.8/9.9/31.6/15.8/9.5

### Example 2

### Part A

To a reaction vessel were charged

| | |
|---|---|
| Toluene | 853.5 parts |
| Isobutyl methacrylate | 495.2 |
| 2-ethylhexyl methacrylate | 434.2 |
| Hydroxyethyl methacrylate | 151.5 |

The mixture was brought to reflux temperature (129°C), held there under nitrogen with stirring, and to it was then added, over a 10-minute period, a solution of

| | |
|---|---|
| Diaquabis(borondifluorodimethylglyoximato)-cobaltate II | 0.033 parts |
| 1,1'-azobis(cyclohexanecarbonitrile) (initiator) | 1.0 |
| Hydroxyethyl methacrylate | 36.6 |
| Toluene | 38.0 |

The reaction mixture was held at reflux temperature with stirring and to it was added, over a 240-minute period, a mixture of

| | |
|---|---|
| Isobutyl methacrylate | 353.1 parts |
| 2-ethylhexyl methacrylate | 414.0 |
| Hydroxyethyl methacrylate | 213.8 |
| Toluene | 76.3 |

The reaction mixture was then held at reflux temperature with stirring for 30 minutes, after which time was added, over a 60-minute period, a mixture of

| | |
|---|---|
| Toluene | 227.9 parts |
| Initiator | 0.9 |

The reaction mixture was further held at reflux temperature for 60 minutes and then cooled. The resulting solution, 63.6% solids, contained the stabilizer component 2-EHMA/IBMA/HEMA 40/40/20.

### Part B

To a reaction vessel were charged

| | |
|---|---|
| Product of A | 639.2 parts |
| Isopropanol | 44.0 |
| Petroleum naphtha | 62.8 |
| Heptane | 790.6 |
| Xylol | 99.1 |

The mixture was brought to reflux temperature (92°C) and to it were added 1.6 parts of t-butyl peroctoate. The reaction mixture was held at reflux temperature and to it were immediately and simultaneously added, over a 210-minute period,
(1) a solution of

| | |
|---|---|
| Methacrylic acid | 42.2 parts |
| Hydroxyethylacrylate | 264.7 |
| Methyl methacrylate | 370.3 |
| Methyl acrylate | 190.6 |
| Styrene | 158.9 |
| Glycidyl methacrylate | 32.2 |
| Xylol | 49.1 |
| Product of A | 320.9 |

and
(2) a solution of

| | |
|---|---|
| Petroleum naphtha | 157.0 parts |
| Butanol | 27.9 |
| t-butyl peroctoate | 15.9 |

The reaction mixture was then held at reflux temperature for 45 minutes and to it was then added, over a 30-minute period, at reflux, a solution of

| | |
|---|---|
| Butanol | 62.8 parts |
| t-butyl peroctoate | 10.4 |

The reaction mixture was held at reflux temperature for a further 60 minutes, at which time 304.8 parts of solvent were boiled off, to give a dispersion containing 55% solids.

The composition of the principal polymer in the resulting product was
IBMA/2EHMA/HEMA/MMA/MA/S/MAA/GMA
29.7/29.7/12.8/13/6.7/5.5/1.5/1.1

The pentacyanocobaltates (II) and diaquabis(borondifluorodiphenylglyoximato)cobaltate (II) can replace the diaquabis (borondifluorodimethylglyoximato) cobaltate (II) catalytic chain transfer agent in the foregoing procedures, in equivalent amounts, with substantially the same result.

## Claims

1. A stabilized polymer dispersion in an organic liquid in which dispersion the polymer comprises (a') a plurality of stabilizer components which are polymers of ethylenically unsaturated monomers, and (b') a core component composed of acrylic polymers or acrylic copolymers with styrene as comonomer; substantially all of the stabilizer components being grafted to the core component at one of the stabilizer ends, the stabilized polymer dispersion being obtainable by a process comprising the following steps
(a) preparing the stabilizer component by polymerizing one or more ethylenically unsaturated monomers, using diaquabis(borondifluorodimethylglyoximato)cobaltate (II) or diaquabis(borondifluorodiphenylglyoximato)cobaltate (II) in an amount of 5 to 150 ppm,
and then
(b) preparing the core component by polymerizing one or more acrylic monomers optionally including styrene while they are in contact with stabilizer components,
steps (a) and (b) being conducted in an organic liquid which is a solvent for the stabilizer components but a non-solvent for the core component.

2. The stabilized polymer dispersion of claim 1 wherein the monomers used in step (a) are butyl methacrylate, isobutyl methacrylate, 2-ethylhexyl methacrylate, hydroxyethyl methacrylate, methyl methacrylate, glycidyl methacrylate, styrene, methacrylic acid, acrylic acid, itaconic acid or anhydride, maleic acid or anhydride, or an isocyanate, silane or amine functional monomer, especially 3-methacryloxypropyl-trimethoxysilane.

3. The stabilized polymer dispersion of claims 1 or 2 wherein the monomers used in step (b) are methyl methacrylate, hydroxyethyl methacrylate, methacrylic acid, styrene, glycidyl methacrylate or a silane, especially 3-methacryloxypropyl-trimethoxysilane.

4. The stabilized polymer dispersion according to claim 1 wherein the monomers used in step (a) are butyl methacrylate, isobutyl methacrylate, 2-ethylhexyl methacrylate, hydroxyethyl methacrylate, methyl methacrylate, glycidyl methacrylate, styrene, methacrylic acid, acrylic acid, itaconic acid or anhydride, maleic acid or anhydride, or an isocyanate, silane or amine functional monomer, especially 3-methacryloxypropyl-trimethoxysilane, and the monomers used in step (b) are methyl methacrylate, hyd roxyethyl methacrylate, methacrylic acid, styrene, glycidyl methacrylate or a silane, especially 3-methacryloxypropyl-trimethoxysilane.

## Patentansprüche

1. Stabilisierte Polymerdispersion in einer organischen Flüssigkeit, wobei die Dispersion des Polymers aufweist: (a') eine Mehrzahl von Stabilisiermittelkomponenten, die Polymere von ethylenisch ungesättigten Monomeren sind, und (b') eine Kernkomponente aus Acrylpolymeren oder Acrylcopolymeren mit Styrol als Comonomer; wobei weitgehend alle Stabilisiermittelkomponenten auf die Kernkomponente an einem der Stabilisiermittel-Enden aufgepfropft sind und wobei die stabilisierte Polymerdispersion durch ein Verfahren erhältlich ist, welches die folgenden Schritte umfasst:
(a) Herstellen der Stabilisiermittelkomponente durch Polymerisieren von einem oder mehreren ethylenisch ungesättigten Monomeren unter Verwendung von Diaquabis(bordifluordimethylglyoximato)cobaltat(II) oder Diaquabis(bordifluordiphenylglyoximato)cobaltat(II) in einer Menge von 5 bis 150 ppm, und anschließend
(b) Herstellen der Kernkomponente durch Polymerisieren von einem oder mehreren Acrylmonomeren, wahlweise einschließend Styrol, während sie sich im Kontakt mit den Stabilisiermittelkomponenten befinden;
wobei Schritte (a) und (b) in einer organischen Flüssigkeit ausgeführt werden, die ein Lösemittel für die Stabilisiermittelkomponenten ist, jedoch ein Nichtlösemittel für die Kernkomponente ist.

2. Stabilisierte Polymerdispersion nach Anspruch 1, bei welcher die in Schritt (a) verwendeten Monomere sind: Butylmethacrylat, Isobutylmethacrylat, 2-Ethylhexylmethacrylat, Hydroxyethylmethacrylat, Methylmethacrylat, Glycidylmethacrylat, Styrol, Methacrylsäure, Acrylsäure, Itaconsäure oder -anhydrid, Maleinsäure oder -anhydrid oder ein Isocyanat, Silan- oder Amin-funktionelles Monomer und speziell 3-Methacryloxypropyltrimethoxysilan.

3. Stabilisierte Polymerdispersion nach Anspruch 1 oder 2, bei welcher die Monomere, die in Schritt (b) verwendet werden, sind: Methylmethacrylat, Hydroxyethylmethacrylat, Methacrylsäure, Styrol, Glycidylmethacrylat oder ein Silan und speziell 3-Methacryloxypropyltrimethoxysilan.

4. Stabilisierte Polymerdispersion nach Anspruch 1, bei welcher die in Schritt (a) verwendeten Monomere sind: Butylmethacrylat, Isobutylmethacrylat, 2-Ethylhexylmethacrylat, Hydroxyethylmethacrylat, Methylmethacrylat, Glycidylmethacrylat, Styrol, Methacrylsäure, Acrylsäure, Itaconsäure oder -anhydrid, Maleinsäure oder -anhydrid oder ein Isocyanat, Silan oder Amin-funktionelles Monomer und speziell 3-Methacryloxypropyltrimethoxysilan; und die in Schritt (b) verwendeten Monomere sind: Methylmethacrylat, Hydroxyethylmethacrylat, Methacrylsäure, Styrol, Glycidylmethacrylat oder ein Silan und speziell 3-Methacryloxypropyltrimethoxysilan.

## Revendications

1. Dispersion de polymère stabilisée dans un liquide organique, dispersion dans laquelle le polymère comprend (a') une pluralité de composants stabilisants qui sont des polymères de monomères éthyléniquement insaturés et (b') un composant de noyau composé de polymères acryliques ou de copolymères acryliques avec du styrène comme comonomère ; substantiellement tous les composants stabilisants étant greffés au composant de noyau à l'une des extrémités du stabilisant, la dispersion stabilisée de polymère étant susceptible d'être obtenue par un procédé comprenant les étapes suivantes :
(a) la préparation du composant stabilisant par polymérisation d'un ou de plusieurs monomères éthyléniquement insaturés, en utilisant du diaquabis(borodifluorodiméthylglyoximato)-cobaltate (II) ou du diaquabis(borodifluorodiphénylglyoximato)cobaltate (II) dans une quantité de 5 à 150 ppm ; et ensuite
(b) la préparation du composant de noyau par polymérisation d'un ou plusieurs monomères acryliques incluant facultativement du styrène pendant qu'ils sont en contact avec les composants stabilisants,
les étapes (a) et (b) étant effectuées dans un liquide organique qui est un solvant pour les composants stabilisants mais est un non-solvant pour le composant de noyau.

2. Dispersion stabilisée de polymère selon la revendication 1 dans laquelle les monomères utilisés dans l'étape (a) sont le méthacrylate de butyle, le méthacrylate d'isobutyle, le méthacrylate de 2-éthylhexyle, le méthacrylate d'hydroxyéthyle, le méthacrylate de méthyle, le méthacrylate de glycidyle, le styrène, l'acide méthacrylique, l'acide acrylique, l'acide ou l'anhydride itaconique, l'acide ou l'anhydride maléique, ou un monomère fonctionnel d'isocyanate, de silane ou d'amine, spécialement le 3-méthacryloxypropyltriméthoxysilane.

3. Dispersion stabilisée de polymère selon les revendications 1 ou 2 dans laquelle les monomètres utilisés dans l'étape (b) sont le méthacrylate de méthyle, le méthacrylate d'hydroxyéthyle, l'acide méthacrylique, le styrène, le méthacrylate de glycidyle ou un silane spécialement le 3-méthacryloxypropyltriméthoxysilane.

4. Dispersion stabilisée de polymère selon la revendication 1 dans laquelle les monomères utilisés dans l'étape (a) sont le méthacrylate de butyle, le méthacrylate d'isobutyle, le méthacrylate de 2-éthyl-hexyle, le méthacrylate d'hydroxyéthyle, le méthacrylate de méthyle, le méthacrylate de glycidyle, le styrène, l'acide méthacrylique, l'acide acrylique, l'acide ou l'anhydride itaconique, l'acide ou l'anhydride maléique, ou un monomère fonctionnel d'isocyanate, de silane ou d'amine, spécialement le 3-méthacryloxypropyltriméthoxysilane et les monomètres utilisés dans l'étape (b) sont le méthacrylate de méthyle, le méthacrylate d'hydroxyéthyle, l'acide méthacrylique, le styrène, le méthacrylate de glycidyle ou un silane, spécialement le 3-méthacryloxypropyltriméthoxysilane.
